# EUROPEAN PATENT APPLICATION

(11) **EP 4 826 282 A1**
(43) Date of publication of application: **21.10.2026**
(21) Application number: 26171701.1
(22) Date of filing: 10.04.2026
(51) Int. Cl.: F16H 63/32, F16H 57/04

(54) **TRUCK COMPRISING AN IMPROVED SHIFT FORK MECHANISM**

(30) Priority: 15.04.2025 NL 2040183
(71) Applicant: DAF Trucks N.V., 5643 TW Eindhoven (NL)
(72) Inventor: AMOROSO FEIJOO, Pedro Jose, 5643 TW Eindhoven (NL); VERRIPS, Michel, 5643 TW Eindhoven (NL)
(74) Representative: V.O.

(57) **Abstract**

Disclosed herein is a truck comprising a transmission with a shift fork mechanism that includes a shift sleeve, a shift fork, and a set of shift pads for transferring input force from the shift fork onto the shift sleeve. Each shift pad is pivotable about a pivot axis and has an elongate working surface for generating hydrodynamic lubrication between the shift pad and the shift sleeve during operation. The working surface has a first section that extends between a leading edge of the shift pad and the pivot axis, and a second section that extends between the pivot axis and a trailing edge of the shift pad, the second section being smaller than the first section. The pivot axis substantially coincides with a center of gravity of the shift pad.

## Description

The invention relates to a truck comprising a transmission with a shift fork mechanism.

### BACKGROUND

Shift fork mechanisms are commonly used in vehicle transmissions to engage or disengage gears. During shifting, a force is applied on the shift fork to displace a shift sleeve from one position to another. The force applied is transferred to the rotating shift sleeve via shift pads, which are in contact with the shift sleeve and slide over its surface generating friction, heat, and potentially wear.

The diameter of the shift sleeve and its rotational speed define the sliding velocity at the interface between the shift pad and shift sleeve. At elevated rotational speeds and/or large shift sleeve diameters, the sliding velocity can become a critical parameter affecting the performance of this contact.

In transmissions for EV applications, the rotating speeds can be significantly higher than those in vehicles with conventional ICEs. For example, the shift pads may be loaded at sliding speeds that surpass 40 m/s during shifting. During cruising, slight contact between the shifting pads and the sleeve could take place at sliding speeds above 120 m/s. Under these conditions it is of paramount importance to ensure optimum lubrication at this interface in order to achieve lifetime and reliability targets and ensure smooth operation.

Lubricated contacts in machine elements generally operate under three different lubrication regimes: Boundary Lubrication (BL), Mixed Lubrication (ML), and Hydrodynamic Lubrication (HL). BL is associated with substantial contact between surface asperities. Under BL, the lubricant forms a thin boundary layer on the contacting surfaces offering some protection against wear. Nevertheless, hydrodynamic effects are negligible, and thus, the contacting surfaces cannot be separated by a film of lubricant. Consequently, friction is high and wear occurs. Under ML, the hydrodynamic effects become more significant and some degree of separation between the contacting surfaces is achieved. As a result, the amount of asperities in contact is reduced resulting in lower friction and wear. Finally, under HL, the hydrodynamic effects become dominant resulting in a complete separation of the contacting surfaces thanks to the fluid pressure buildup at the interface. This results in a substantial reduction in friction and virtually the elimination of wear.

If lubrication is inadequate, the amount of frictional power can rapidly elevate the contact temperatures promoting the generation of severe wear. For this reason, ensuring optimum lubrication at this interface is essential.

Conventionally, lubricant supply to the shift pad - shift sleeve interface is attained via splashed lubrication, sprayed lubrication, and/or oil bath lubrication. However, different risks have been identified with these lubricant supply approaches. The effectiveness of splashed lubrication is difficult to predict and it is highly dependent on rotational speed and oil viscosity. Sprayed lubrication, enables a continuous and somewhat uniform lubricant supply. Nevertheless, the amount of lubricant that actually flows into the interface is highly dependent on the direction, pressure, flowrate, and velocity of the oil jet. At high speeds, ventilation effects (generated by the rotating sleeve) can blow the lubricant away from the contact resulting in reduced oil supply. Finally, oil bath lubrication becomes ineffective at high speeds since most of the lubricant is not dragged to the interface but rather splashed away due to the elevated centrifugal forces.

Furthermore, starved lubrication may occur when the supply of lubricant to the interface is insufficient. This phenomenon is likely to occur in contacts operating under very high sliding speeds. If the amount of lubricant flowing into the contact is reduced, hydrodynamic lubrication is jeopardized, even if in theory viscosity and speed are adequate. Under limited lubricant supply (LLS), the film thickness may drop significantly and interface temperatures can substantially rise. In fact, under LLS, the film thickness becomes practically independent of speed.

Designing a shift fork mechanism that ensures adequate lubricant supply to the shift pad while achieving hydrodynamic lubrication across varying operating loads and speeds presents a significant challenge.

### SUMMARY

In summary, the present invention provides a modified shift pad that enhances the tribological performance of the interface between the shift pad and the shift sleeve, to positively impact the lifetime and reliability of the shift fork mechanism. These improvements are attained by incorporating features that contribute to the generation of hydrodynamic lubrication, and hence, the formation of a lubricant film between the contacting surfaces that prevents wear and overheating. These modifications are described in detail below.

In one aspect, the invention provides a truck as defined in the appended claims. The truck comprises a transmission with a shift fork mechanism that includes a shift sleeve, a shift fork, and a set of shift pads.

The shift sleeve is rotatable about an axial centerline and displaceable along the axial centerline between a first position and a second position for engaging and disengaging gears of the transmission.

The shift fork is arranged for receiving an input force and for transferring the input force onto the shift sleeve to displace the shift sleeve between the first position and the second position.

The set of shift pads are mounted to the shift fork and in lubricated contact with the shift sleeve. The set of shift pads are arranged for transferring the input force onto the shift sleeve, e.g. while the shift sleeve rotates about the axial centerline.

Each shift pad is pivotable about a pivot axis transverse to the axial centerline of the shift sleeve. Each shift pad has an elongate working surface that extends in the direction of rotation of the shift sleeve and is arranged for generating hydrodynamic lubrication between the shift pad and the shift sleeve during operation. The working surface has a first section that extends between a leading edge of the shift pad and the pivot axis, and a second section that extends between the pivot axis and a trailing edge of the shift pad. The second section is smaller than the first section. The pivot axis substantially coincides with a center of gravity of the shift pad.

In other words, the first portion of the working surface is relatively larger than the second section. This deliberate alteration, in combination with the pivoting effect, creates a wedge shape during operation as hydrodynamic pressure builds up, facilitating the occurrence of hydrodynamic lubrication.

While the pivot axis enables rotation of the shift pad to promote even load distribution and the formation of a lubricant wedge during operation, the pivot axis also substantially coincides with the center of gravity of the shift pad, resulting in a balanced body of the shift pad. In this way, undesirable vibrations or tilting, during operation or during assembly, are prevented.

Thus, by creating an asymmetry or eccentricity in the working surface of the shift pad, whilst ensuring alignment between the pivot axis and center of gravity, hydrodynamic lubrication can be obtained without oscillations.

The disclosed invention has the ability to optimize lubrication at the interface between the shift pad and the shift sleeve, which is critical for reducing wear and tear, minimizing friction, and preventing overheating. This aspect may be particularly beneficial for meeting the demanding performance and reliability standards in high-speed EV applications.

Preferably, the first section of the working surface and the second section of the working surface are sized and shaped to balance a mass distribution of the shift pad about the pivot axis. In this way, it can be ensured that the center of gravity of the shift pad is in line with the pivot axis. Alternatively, or additionally, the geometry of the shift pad as a whole may be tuned such that its center of gravity is substantially located on the pivot axis.

As used herein, the term "substantially coincides with the pivot axis" or "substantially located on the pivot axis", referring to the relative position or alignment between the center of gravity of the shift pad and the pivot axis, is within standard error margins of conventional measurement systems as used in the field, and within conventional manufacturing tolerances of the shift pad, or any other tolerance, that the skilled person would take into consideration in the technical field of the present invention.

To reduce the effective size of the second section with respect to the first section, the trailing edge may be recessed with respect to the leading edge, e.g. by a step or a gradually receding second section. For example, the second section of the working surface may be connected to the recessed trailing edge by a curved part that curves down from the second section towards the recessed trailing edge. In other words, the first and second sections of the working surface are substantially flat and during operation enter into contact with the shift sleeve, and the curved part is used to delimit the working surface, the second section in particular. To delimit the working surface and enhance lubricant entrainment, the leading edge and the trailing edge may be rounded. The rounded curvature prevents lubricant that is dragged by the shift sleeve from being wiped away, and ensures that during operation a lubricant film with sufficient thickness is present between the working surface of the shift pad and the shift sleeve. For the same reason, the leading edge and the trailing edge may be directed inwards towards the axial centerline of the shift sleeve. This further facilitates the entrainment of lubricant, which may be supplied externally by either splashed, oil bath and/or sprayed lubrication, or internally via spot lubrication.

Preferably, the first section of the working surface comprises a lubricant supply hole near the leading edge. This lubricant supply hole may be fluidly connected to a lubricant supply channel and arranged for spot lubrication of the first and second section of the working surface. The lubricant supply channel preferably extends through an interior of the shift pad, e.g. below the first working surface and along the pivot axis, and may be integrally formed as part of the shift pad. Alternatively, the lubricant supply channel may be formed by a separate hose that is coupled to the lubricant supply hole.

For providing a local reservoir for retaining lubricant during contact between the working surface and the shift sleeve, a cavity is preferably formed in the working surface around the hole such that the first section of the working surface is locally recessed. The cavity preferably has a depth of 0.1 - 2 millimeters from the working surface, more preferably a depth between 0.1 and 0.8 millimeters. To allow an even distribution of lubricant across a width of the first section of the working surface, the cavity preferably has a width that extends up to opposing lateral edges of the first section of the working surface.

The shift pad preferably comprises a clearance step that extends along the working surface, at that is recessed or lowered with respect to the working surface for thereby defining a longitudinal edge of the working surface. The longitudinal edge is preferably chamfered or deburred. The clearance step may have a depth of a few hundred microns, e.g. 100-1000 micrometer, or more, to ensure that the working surface of the pad is contained inside the working surface of the sleeve. In that way edge loading effects are mitigated.

In some embodiments, at least the first section of the working surface has a surface texture for retaining lubricant. The surface texture may for example include grooves that extend transverse to a direction of movement between the shift pad and the shift sleeve when rotation about the axial centerline, and/or dimples in the working surface.

To reduce friction and minimize wear during operation, preferably at least the working surface of the shift pad is made of brass or a high wear/temperature resistant polymer like Torlon (polyamide-imide) e.g., by means of a coating,, while the shift sleeve, or at least its working surface, is made of steel. Alternatively, the entire body of the shift pad may be made of brass. For the same reason, the working surface of the shift pad preferably has a surface finish of Ra 0.8 micrometer or less, more preferably Ra 0.5 micrometer or less, and the working surfaces of the shift sleeve preferably Ra 0.4 micrometer or less.

In preferred embodiments, the shift pad is two-sided for pushing the shift sleeve both forward along the axial centerline, e.g. from the first position to the second position, as well as backward, e.g. from the second position to the first position. Hence, while the working surface discussed above is provided on a first side of the shift pad for transferring the input force onto the shift sleeve in a first direction along the axial centerline, the shift pad preferably comprises a further working surface on a second side opposite the first side for transferring the input force onto the shift sleeve in a second direction along the axial centerline. To maintain balance in the shift pad, the working surface and the further working surface are preferably symmetrical about a mirror plane that substantially coincides with the pivot axis.

### BRIEF DESCRIPTION OF THE DRAWINGS

The invention will be further elucidated in the figures:
FIG. 1 illustrates an embodiment of a truck, comprising a transmission with a shift fork mechanism;
FIGs. 2A-B provide an isometric view and an exploded view, respectively, of an embodiment of the shift fork mechanism;
FIG. 3 provides a side view of an embodiment of the shift fork mechanism, including a detailed view of the interface between the shift pad and the shift sleeve;
FIG. 4 illustrates an embodiment of the shift pad in isolation;
FIG. 5 provides various views, including section views, of an embodiment of the shift pad;
FIG. 6 illustrates another or further embodiment of the shift pad;
FIG. 7 illustrates yet another or further embodiment of the shift pad.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

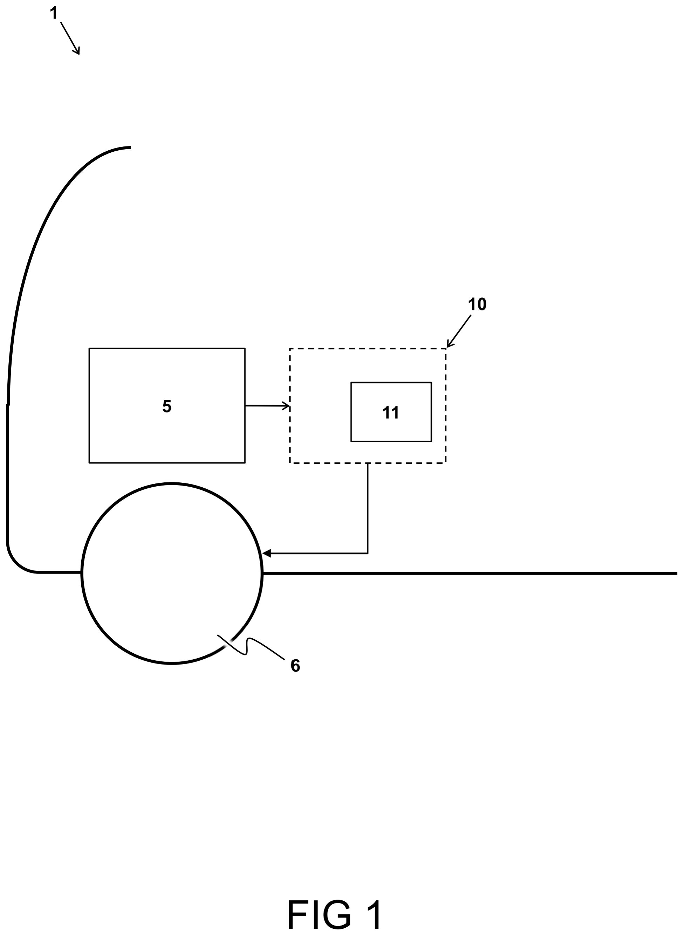

FIG. 1 illustrates an embodiment of a truck 1. The truck 1 may be an electric truck, comprising a traction motor 5 that is arranged for driving wheels 6 of the truck 1, via a transmission 10. The transmission 10 comprises a set of gears, and a shift fork mechanism 11 for shifting between the gears.

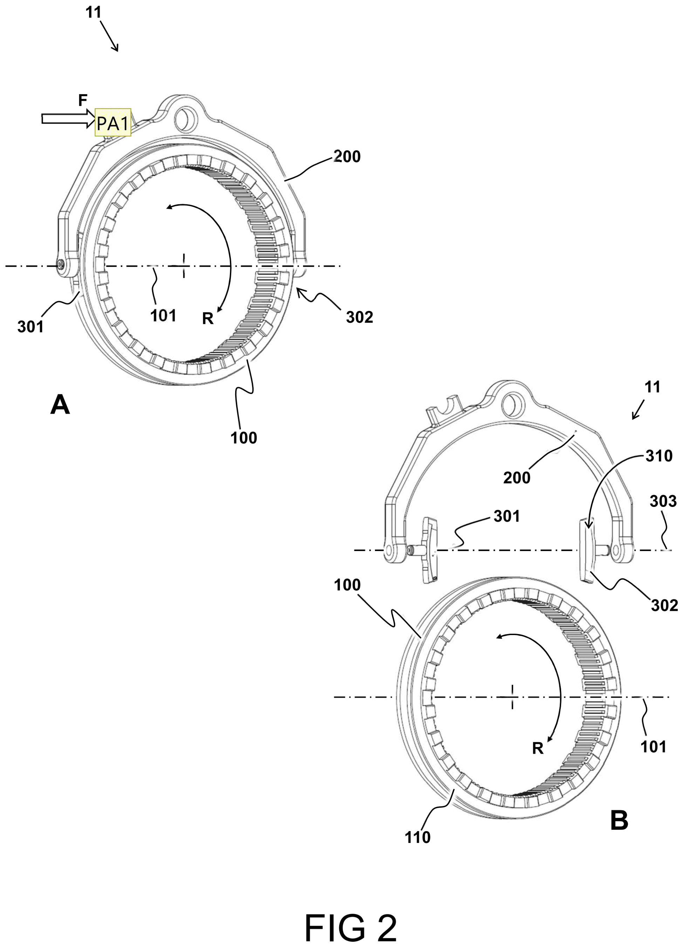

FIG. 2 provides a detailed view of an embodiment of the shift fork mechanism 11, in assembled state (FIG. 2A) and in exploded view (FIG. 2B). As illustrated, the shift fork mechanism 11 comprises a shift sleeve 100 that is rotatable about an axial centerline 101, e.g. in either clockwise or anticlockwise direction of rotation R, and displaceable along the axial centerline 101 between a first position and a second position for engaging and disengaging gears of the transmission 10. In the embodiment shown in FIG. 2A-B, the shift pads 301, 302 are arranged for a clockwise predominant rotational direction R of the shift sleeve 100.

The shift fork mechanism 11 comprises a shift fork 200 that is arranged for receiving an input force F and for transferring the input force F onto the shift sleeve 100 to displace the shift sleeve 100 between the first position and the second position along the axial centerline 101.

A pair of shift pads 301, 302 are mounted to the shift fork 200 and in lubricated contact with the shift sleeve 100. During operation of the shift fork mechanism, the shift pads 301, 302 transfer the input force F onto the shift sleeve 100 while the shift sleeve 100 rotates about the axial centerline 101. Each shift pad 301, 302 is pivotable about a pivot axis 303 transverse to the axial centerline 101 of the shift sleeve. For example, when the axial centerline 101 extends in a first direction X, the pivot axis 303 extends in a second direction Y orthogonal to the first direction X. Pivot axis 303 may intersect the axial centerline 101 in the heart of the shift sleeve 100.

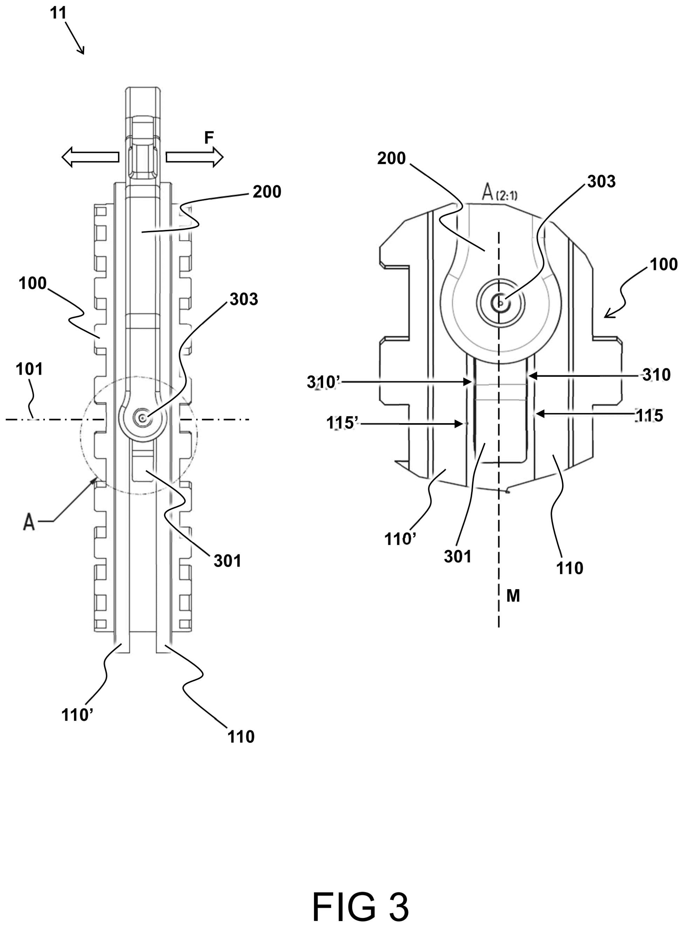

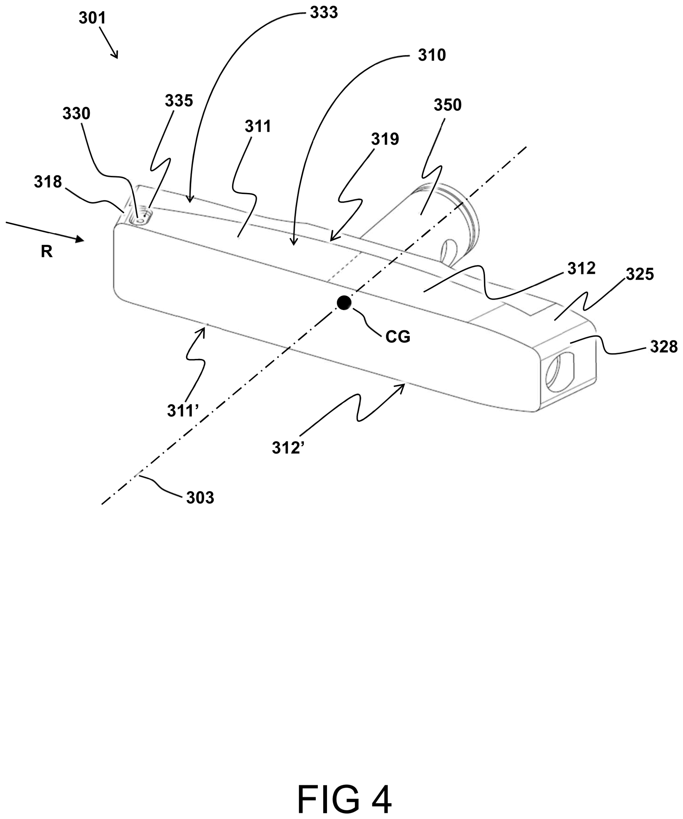

Each shift pad 301, 302 has an elongate working surface 310 that extends in the direction of rotation R of the shift sleeve and is arranged for generating hydrodynamic lubrication between the shift pad 301, 302 and the shift sleeve 100 during operation. The shift pads are designed to operate under a predominant rotational direction R of the shift sleeve 100, see for example FIG. 2 and 4. The working surface 310 is substantially normal to the axial centerline 101 of the shift sleeve, and is arranged for pushing against a flange 110 of the shift sleeve, to move the shift sleeve 100 forward or backward along the axial centerline 101, see also FIG. 3.

FIG. 3 shows the mating, i.e. interacting or contacting, working surfaces of the shift pad 301 and the shift sleeve 100. Working surface 310' of the shift pad 301 contacts mating working surface 115' of the shift sleeve 100 when the shift fork 200 is pushed to the left, and working surface 310 of the shift pad 301 contacts mating working surface 115 of the shift sleeve 100 when the shift fork 200 is pushed to the right.

In more general terms, the working surface 310 may be provided on a first side of the shift pad 300 for transferring the input force F onto the shift sleeve 100, e.g. against a mating working surface 115 of flange 110, in a first direction along the axial centerline 101. The shift pad 300 may also comprise a further working surface 310' on a second side of the shift pad 300, opposite the first side, for transferring the input force F onto the shift sleeve 100, e.g. against a further mating working surface 115' of flange 110', in a second direction along the axial centerline 101. Preferably, the working surface 310 and the further working surface 310' are symmetrical about a mirror plane M that substantially coincides with the pivot axis 303. To reduce friction and wear of the shift sleeve 100 during operation, the working surfaces 310, 310' of the shift pads may comprise a brass coating, or the entire shift pad 301, 302 may be made of brass or a high wear/temperature resistant polymer like Torlon (polyamide-imide), while the shift sleeve 100, or at least its flanges 110, 110' may provide mating working surfaces 115, 115' that are made of steel, thus providing a brass-steel interface with the working surfaces of the shift pad. To further reduce friction and wear, the working surfaces of the shift pads preferably have a surface finish of Ra 0.8 micrometer or less, more preferably Ra 0.5 micrometer or less, and the working surfaces of the shift sleeve preferably Ra 0.4 microns or less.

In accordance with the present invention, the pivot axis 303 substantially coincides with the center of gravity CG of the shift pad 301. The pivot axis 303 enables rotation of the shift pad 301, to promote even load distribution and the formation of a lubricant wedge during operation. It is important to point out that the pivot axis 303 substantially coincides with the center of gravity CG of the shift pad, thereby resulting in a balanced body. In this way, undesirable vibrations or tilting during operation are prevented. This, in turn, increases the performance and lifespan of the shift fork mechanism.

As illustrated in more detail in FIG. 4, the working surface 310 has a first section 311 that extends between a leading edge 318 of the shift pad and the pivot axis 303, and a second section 312 that extends between the pivot axis 303 and a trailing edge 328 of the shift pad. The relative position of the leading edge 318 and the trailing edge 328 on the shift pad is dependent on the rotational direction R of the shift sleeve, in this illustration from left to right. There is an asymmetry between the first and second section 311, 312 of the working surface, in that the second section 312 is smaller than the first section 311. In this embodiment, the trailing edge 328 is recessed with respect to the leading edge 318. In other words, the trailing edge 328 is tapered, or has a boat tail shape. As a result, the effective size of the second section 312 is reduced with respect to the first section 311. As illustrated, the second section 312 of the working surface is connected to the recessed trailing edge 328 by a curved part 325 that curves down from the second section 312 towards the recessed trailing edge 328.

The working surface 310, and thus the first section 311, 311' and the second section 312, 312', is provided on a front and/or rear side of the shift pad 301 that is substantially normal to the axial centerline of the shift sleeve. As illustrated, the front or rear side preferably has a cut or step with a depth of a few hundred microns, e.g. 100-1000 microns, or more, to define the working surface. In other words, a portion of the front and/or rear side comprises a clearance step 333 that extends alongside the working surface 310, e.g. in direction of rotation R, and that is recessed or lowered with respect to the working surface, thereby defining a longitudinal edge 319 of the working surface. See FIG. 4, 5 and 7. This ensures that the working surface is contained inside the intended contact area with the working surface of the shift sleeve. In that way edge loading effects can be mitigated. The longitudinal edge 319 of the working surface may be chamfered or deburred.

FIG. 4 further shows that the leading edge 318 and the trailing edge 328 are be rounded, and directed inwards towards each other, thereby providing a shift pad 301 that tapers from a larger length along the longitudinal axis of the shift pad where the shift pad 301 is intended to engage with a part of the working surface of the shift sleeve that has a larger diameter, towards a smaller longitudinal length where the shift pad 301 is intended to engage with a portion of the shift sleeve working surfaces at a smaller diameter. This delimits the effective working surface 310 of the shift pad 301 and enhance lubricant entrainment. The rounded curvature prevents lubricant that is dragged by the shift sleeve from being wiped away, and ensures that during operation a lubricant film with sufficient thickness is present between the working surface of the shift pad and the shift sleeve.

Unlike prior art solutions like GB1287250A, where the pivot axis is not aligned with the center of gravity of the shift pad, the design of the shift pad according to the present invention ensures that balance is maintained in the shift pad during operation, by alignment of the pivot axis 303 with the center of gravity CG of the shift pad. In the present design, the first section 311 is asymmetric with respect to the second section 312. In other words, the first section 311 is larger than the second section 312. This deliberate alteration, in combination with the pivoting effect, creates a wedge shape during operation as hydrodynamic pressure builds up, facilitating the occurrence of hydrodynamic lubrication.

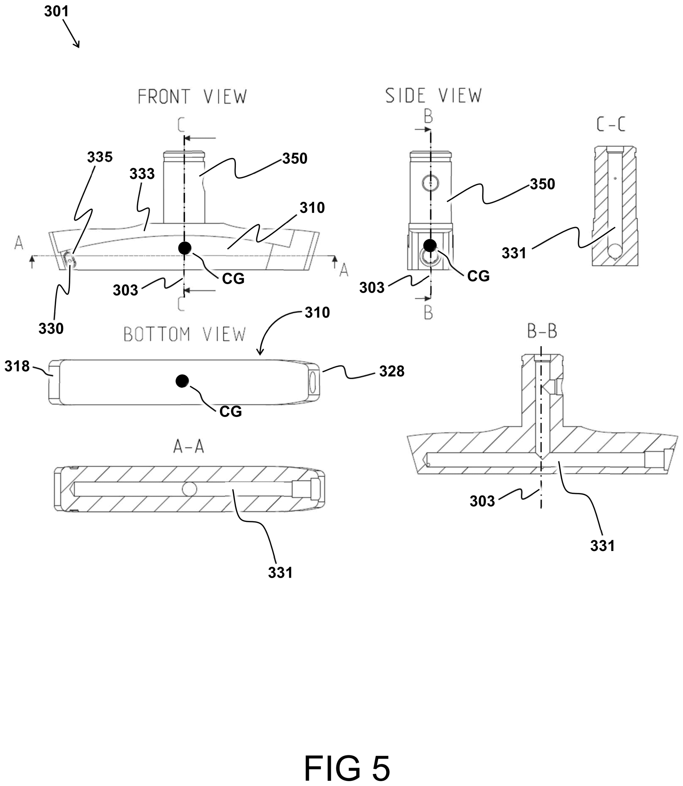

Lubricant may be supplied externally by either splashed, oil bath and/or sprayed lubrication, or internally via spot lubrication. In the latter case, the first section 312 preferably comprises a lubricant supply hole 330 near the leading edge 318, e.g. directly behind the leading edge. The lubricant supply hole 330 may be fluidly connected to an integral lubricant supply channel 331 that extends from the lubricant supply hole 330 within an interior of the shift pad 301 below the working surface, towards the boss end 350 of the shift pad, as illustrated in FIG. 5. The relatively forward position of the lubricant supply hole 330 ensures that spot lubrication of both the first and second section 311, 312 of the working surface is provided during operation.

Thus, to maintain an effective lubricant supply and prevent starved lubrication, the design of the present invention preferably relies on spot lubrication. Fresh lubricant can be supplied through the hole 330 located very close to the leading edge 318. In that way, the shift sleeve can drag the lubricant from the leading edge 318 to the trailing edge 328, ensuring proper replenishment and even distribution along the entire working surface 310 of the shift pad. It should be noted that the location of the hole 330 is dependent on the rotational direction R of the shift sleeve. For example, assuming that in FIG. 2, the shift sleeve 100 rotates clockwise, the lubricant supply hole 330 of the left shift pad 301 should be located at the bottom. The opposite holds for the right shift pad 302, where the lubricant supply hole should be located at the top in case of a clockwise rotation R of the shift sleeve 100.

In order to provide a local reservoir for retaining lubricant during contact between the working surface 310 and the shift sleeve, a cavity 335 is formed in the working surface around the hole 330 such that the first section 311 of the working surface is locally recessed. This cavity 355 thus functions as a lubricant "pocket". The cavity 335 preferably has a depth of 100-300 microns from the working surface, or a larger depth between 0.1 and 2 millimeters. The cavity 335 prevents the lubricant supply hole 330 from being sealed by the mating working surface of the shift sleeve. To allow an even distribution of lubricant across a width of the first section of the working surface, the cavity has a width that extends up to opposing lateral edges of the first section of the working surface, as illustrated in FIG. 4 and 5, with FIG. 5 showing different projections and cross-sectional views of the embodiment of the shift pad 301 for clarity.

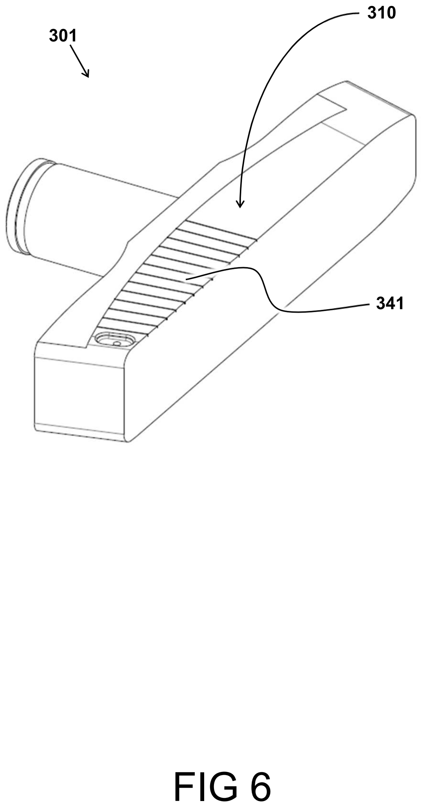

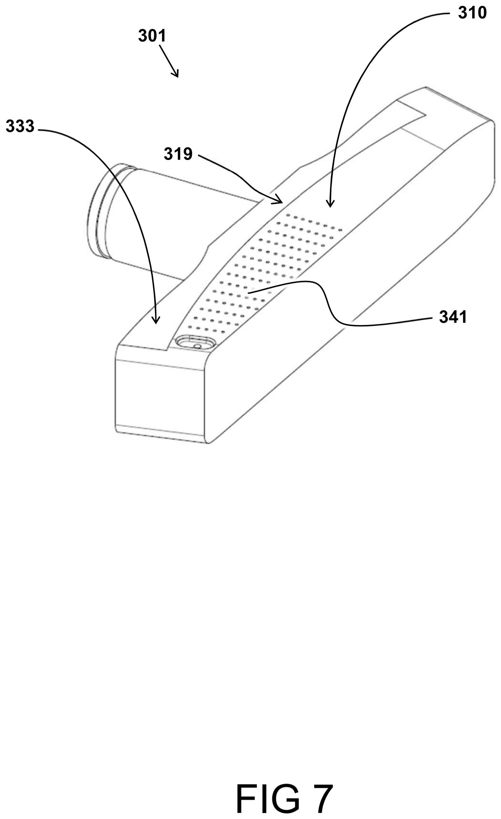

To further enhance the performance of the interface between the shift pad 300 and the shift sleeve 200, surface textures can be introduced on the working surface 310 of the shift pad 300, as illustrated in FIGs. 6 and 7. In this way, pressure buildup can be enhanced during hydrodynamic lubrication or mixed lubrication and lubricant can be stored during boundary lubrication to prevent the breakdown of the lubricant boundary layer due to overheating.

Figure 6 shows an example of an embodiment in which the working surface has a partially grooved surface, thus where only a portion of the working surface 310 contains textures. The surface texture may include grooves 341 that extend transverse to the shift sleeve's direction of rotation, e.g. transverse to the longitudinal axis of the shift pad 301. Alternatively, or additionally, the surface texture can include dimples 342 in the working surface 310. Figure 7 shows a partially dimpled surface. Surface textures can be applied either partially, only on a section of the working surface 310, or fully, over the whole working surface. It should be noted that textures are not limited to grooves and dimples. Different shapes like, for example, chevrons, squares, or triangles can also be used to generates the effects described above.

It will be clear to the skilled person that the invention is not limited to any specific embodiment herein described and that combinations or modifications are possible, in as far as these can be considered within the scope of the appended claims. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such.

## Claims

1. A truck, comprising a transmission with a shift fork mechanism that includes:
- a shift sleeve that is rotatable about an axial centerline and displaceable along the axial centerline between a first position and a second position for engaging and disengaging gears of the transmission;
- a shift fork that is arranged for receiving an input force and for transferring the input force onto the shift sleeve to displace the shift sleeve between the first position and the second position;
- a set of shift pads that are mounted to the shift fork and in lubricated contact with the shift sleeve, wherein the set of shift pads are arranged for transferring the input force onto the shift sleeve;
wherein each shift pad is pivotable about a pivot axis transverse to the axial centerline of the shift sleeve;
wherein each shift pad has an elongate working surface that extends in the direction of rotation of the shift sleeve and is arranged for generating hydrodynamic lubrication between the shift pad and the shift sleeve during operation;
wherein the working surface has a first section that extends between a leading edge of the shift pad and the pivot axis, and a second section that extends between the pivot axis and a trailing edge of the shift pad, the second section being smaller than the first section; and
wherein the pivot axis substantially coincides with a center of gravity of the shift pad.

2. The truck according to claim 1, wherein the first section of the working surface and the second section of the working surface are sized and shaped to balance a mass distribution of the shift pad about the pivot axis.

3. The truck according to any preceding claim, wherein the trailing edge is recessed with respect to the leading edge for thereby reducing the effective size of the second section with respect to the first section.

4. The truck according to claim 3, wherein the second section of the working surface is connected to the recessed trailing edge by a curved part that curves down from the second section towards the recessed trailing edge.

5. The truck according to any preceding claim, wherein the leading edge and the trailing edge are rounded.

6. The truck according to any preceding claim, wherein the leading edge and the trailing edge are directed inwards towards the axial centerline of the shift sleeve.

7. The truck according to any preceding claim, wherein the first section of the working surface comprises a lubricant supply hole near the leading edge, wherein the lubricant supply hole is fluidly connected to a lubricant supply channel and arranged for spot lubrication of the first and second section of the working surface.

8. The truck according to claim 7, wherein a cavity is formed in the working surface around the hole such that the first section of the working surface is locally recessed, wherein the cavity preferably has a depth of 0.1 - 2 millimeters from the working surface, for providing a local reservoir for retaining lubricant during contact between the working surface and the shift sleeve.

9. The truck according to claim 8, wherein the cavity has a width that extends up to opposing lateral edges of the first section of the working surface, for allowing an even distribution of lubricant across a width of the first section of the working surface.

10. The truck according to any preceding claim, wherein the shift pad comprises a clearance step that extends along the working surface, wherein the clearance step is recessed or lowered with respect to the working surface and defines a longitudinal edge of the working surface, wherein the longitudinal edge is preferably chamfered or deburred.

11. The truck according to any preceding claim, wherein at least a part of the first section of the working surface has a surface texture for retaining lubricant.

12. The truck according to claim 11, wherein the surface texture includes grooves that extend transverse to a direction of movement between the shift pad and the shift sleeve when rotating about the axial centerline, and/or wherein the surface texture includes dimples in the working surface.

13. The truck according to any preceding claim, wherein at least the working surface of the shift pad is made of brass.

14. The truck according to any preceding claim, wherein the working surface has a surface finish of Ra 0.8 micrometer or less, preferably Ra 0.5 micrometer or less.

15. The truck according to any preceding claim, wherein the working surface is provided on a first side of the shift pad for transferring the input force onto the shift sleeve in a first direction along the axial centerline, and wherein the shift pad comprises a further working surface on a second side opposite the first side for transferring the input force onto the shift sleeve in a second direction along the axial centerline, wherein the working surface and the further working surface are symmetrical about a mirror plane that substantially coincides with the pivot axis.
